# EUROPÄISCHE PATENTSCHRIFT

(11) **EP 2 765 019 B1**
(45) Veröffentlichungstag und Bekanntmachung des Hinweises auf die Patenterteilung: **16.02.2022**
(21) Anmeldenummer: 13004495.1
(22) Anmeldetag: 14.09.2013
(51) Int. Cl.: H01M 10/667, H01M 10/651, B60L 58/25, B60L 58/26, B60L 3/00, B60L 15/20, H01M 10/633, H01M 10/613, H01M 10/48, H01M 10/44, B60L 1/00, H01M 10/625

(54) **Verfahren und Anordnung zur Optimierung der motorischen Verfügbarkeit einer mittels Kühlkreislauf gekühlten Elektromobilitätskomponente**
Method and arrangement for optimising the motor availability of electromobility components cooled by a cooling circuit
Procédé et agencement pour l'optimisation de la disponibilité motorique d'un composant d'électromobilité refroidi au moyen d'un circuit de refroidissement

(30) Priorität: 07.02.2013 DE 102013002198
(43) Veröffentlichungstag der Anmeldung: 13.08.2014
(73) Patentinhaber: MAN Truck & Bus SE, 80995 München (DE)
(72) Erfinder: Grimm, Thomas, 80339 München (DE)
(74) Vertreter: Liebl, Thomas

(56) Entgegenhaltungen:
- EP-A1- 2 177 389
- EP-A1- 2 508 373
- EP-A2- 1 637 709
- DE-A1- 19 730 678
- DE-A1-102005 023 365
- DE-A1-102008 011 225
- DE-A1-102009 000 709
- DE-A1-102009 028 407
- DE-A1-102009 046 568
- DE-A1-102010 060 230
- DE-A1-102010 063 376
- DE-A1-102011 102 753
- DE-T2- 60 030 630
- GB-A- 2 341 830
- JP-A- 2004 324 613
- JP-A- 2006 139 963
- US-A1- 2003 118 891
- US-A1- 2007 157 647
- US-B1- 6 321 697

## Beschreibung

Gegenstand der Erfindung ist ein Verfahren zur Optimierung der motorischen Verfügbarkeit einer mittels Kühlkreislauf gekühlten Elektromobilitätskomponente, die Antriebsleistung in ein Fahrzeug einspeist. Weiter gehört es zur Erfindung, eine Anordnung zur Durchführung des Verfahrens anzugeben.

Elektromobilitätskomponenten, die Antriebsleistung in einen Fahrzeug einspeisen, gewinnen zunehmend an Bedeutung. Sowohl rein elektromotorisch betriebene Fahrzeuge, als auch sogenannte Hybridfahrzeuge, die neben der Elektromobilitätskomponente über einen Verbrennungsmotor verfügen, gelten als besonders umweltfreundlich, weil sie den Verbrauch an Kohlenwasserstoff basierten Kraftstoffen vermeiden oder zumindest minimieren. Neben dem Fortfall bzw. der Reduzierung umweltschädlicher Emissionen werden die potenziell geringeren Betriebskosten als besonderer Vorteil von solchen Fahrzeugen mit Elektromobilitätskomponente gewertet.

Die vorstehend genannten Fahrzeugtypen verfügen üblicherweise auch über die Fähigkeit, durch Nutzung des Elektromotors als Generator, die bei Verzögerungsvorgängen abzubauende kinetische Energie in elektrische Energie umzuwandeln und in den Energiespeicher einzuspeichern, was die Umwelt- und Kostenbilanz zusätzlich verbessert.

Nachteilig bewertet werden bei diesen Fahrzeugtypen üblicherweise die geringe Reichweite, wenn es sich um rein elektromotorisch betriebene Fahrzeuge handelt, sowie die hohen Kosten für die in diesen Fahrzeugtypen verwendeten Energiespeicher. Bei Hybridfahrzeugen fallen darüber hinaus neben den Kosten für die Elektromobilitätskomponente auch noch die Kosten für einen konventionellen Antrieb an, so dass bei diesem Fahrzeugtyp die Wirtschaftlichkeit und die positive Umweltbilanz in hohem Maße davon abhängt, dass die Elektromobilitätskomponente beim Durchfahren einer Fahrstrecke im Verhältnis zum konventionellen Antrieb möglichst lange in Betrieb gehalten wird.

Sowohl für rein elektromotorisch betriebene Fahrzeuge als auch für Hybridfahrzeuge ergibt sich demnach die Forderung, die mittels Elektromobilitätkomponente erzeugte Antriebsleistung zu optimieren.

Unter Elektromobilitätskomponente wird im Folgenden ganz allgemein der Teil eines Fahrzeugs verstanden mit dessen Hilfe elektrische Energie als Antriebsleistung für das Fahrzeug verfügbar gemacht wird. Es kann sich dabei um mehrere Teilkomponenten handeln.

Bekanntermaßen fallen bei allen Antrieben, insbesondere auch bei elektromotorischen Antrieben des vorstehend genannten Typs, Verlustleistungen an, die durch Kühlung mit Hilfe eines Kühlkreislaufs an die Außenwelt abgeführt werden müssen. Hierbei gilt es sowohl die Antriebsmaschine selbst, als auch den Energiespeicher so zu kühlen, dass die angesprochenen Komponenten ihre Grenztemperatur nicht erreichen. Dies gilt sowohl für den motorischen als auch für den generatorischen Betrieb, der auch als Rekuperationsbetrieb bezeichnet wird.

Der Begriff Kühlkreislauf ist im Folgenden ganz allgemein zu verstehen, er soll insbesondere auch mehrteilige Kühlkreisläufe umfassen, die wärmetechnisch gekoppelt sein können und deren Temperaturniveau unterschiedlich sein kann.

Zum Betrieb des angesprochenen Kühlkreislaufs ist eine nicht unerhebliche Energiemenge erforderlich, um Umwälzpumpe, Lüftermotor und gegebenenfalls eine Kältemaschine anzutreiben, um nur einige energiekonsumierende Komponenten zu nennen. Um den Energieaufwand für den Betrieb der energiekonsumierenden Komponenten eines Kühlkreislaufs möglichst gering zu halten, sieht die Kühlstrategie üblicherweise vor, dem Kühlkreislauf nur so viel Wärme zu entziehen, wie es erforderlich ist, um eine Solltemperatur der zu kühlenden Komponenten einzuhalten.

Aus dem Vorstehenden ergeben sich demnach die gegenläufigen Forderungen einerseits die Antriebsleistung selbst und/ oder die Verfügbarkeit der Antriebsleistung zu erhöhten was nach den bisher üblichen Verfahrensweisen nur mit einer Auslegung der Kühlleistung für die Elektromobilitätskomponente auf den Maximalfall möglich ist und andererseits die durch die Komponenten des Kühlkreislauf konsumierte Energie so gering wie möglich zu halten, was es erforderlich macht, diese Komponenten so auszubilden, dass sie möglichst wenig Leistung konsumieren, was aber einer Verringerung der Kühlleistung gleich kommt.

Die DE 10 2009 046 568 A1 betrifft ein Verfahren zum Betrieb eines Fahrzeugs mit elektrischem Antrieb, bei dem der elektrische Antrieb mit einer von einer zurückzulegenden Fahrtstrecke abhängigen Regelungsstrategie betrieben wird. Dieser Betrieb kann ein Temperaturmanagement mindestens eines Energiespeichers des Fahrzeugs umfassen. Konkret werden hier dabei anhand der Parameter der zurückzulegenden Fahrtstrecke Lastprofile ermittelt, die angeben, welche Antriebsenergie zu welchem Zeitpunkt bereitgestellt werden muss. Sofern dabei Lastspitzen erfasst werden, die eine starke Temperaturerhöhung bewirken und somit zu einer Überhitzung führen können, wird hier vorausschauend eine Vorkühlung des mindestens einen Energiespeichers ausgeführt.

Aus der EP 2 508 373 A1 betrifft ein Klimatisierungssystem für ein Fahrzeug zur Kühlung bzw. Luft-Aufheizung eines Temperatur-Steuerobjekts, bei dem mittels einer Steuereinrichtung die Kühlung bzw. Luft-Aufheizung des Temperatur-Steuerobjekts in Abhängigkeit von einer mittels einer Zieltemperatur-Einstelleinheit eingestellten Zieltemperatur eingestellt wird.

Die DE 10 2010 060 230 A1 betrifft ein Temperiersystem für eine Antriebsvorrichtung eines Kraftfahrzeugs.

Die EP 1 637 709 A2 beschreibt eine Vorrichtung zum Wärmetauschen mit mehreren Kühlkreisläufen.

Auch die US 2007/0157647 A1 zeigt ein Kühlsystem für Kraftfahrzeuge

Aus der JP 2004 324613 A ist ein Hybridfahrzeug mit mehreren Kühlkreisläufen bekannt.

Aufgabe der Erfindung ist es, ein Verfahren zum Betrieb einer mittels Kühlkreislauf gekühlten Elektromobilitätskomponente anzugeben, das es ermöglicht die motorische Verfügbarkeit der Elektromobilitätskomponente zu erhöhen, ohne dass die Elektromobilitätskomponente ihre Grenztemperatur erreicht und ohne dass die Kühlleistung des Kühlkreislauf auf den Maximalfall ausgelegt sein muss. Unter Erhöhen der motorischer Verfügbarkeit wird dabei verstanden, die Antriebsleistung selbst und/ oder die Verfügbarkeit der Antriebsleistung zu erhöhen oder anders ausgedrückt die durch die Elektromobilitätskomponente zur Verfügung gestellte Antriebsleistung zu optimieren.

Weiter gehört es zur Aufgabe der Erfindung, eine Anordnung zur Durchführung des Verfahrens anzugeben.

Es wurde gefunden, dass sich die Aufgabe vorteilhaft dadurch lösen lässt, dass mittels einer Steuer- und Regeleinheit aus einer zukünftigen Fahrstrecke Spitzenbelastungen des Kühlkreislaufs ermittelt werden und dass fahrstreckenbezogen zeitlich vor diesen Spitzenbelastungen des Kühlkreislaufs vorausschauend mittels wenigstens eines im Kühlkreislauf vorgesehenen Wärmetauschers zusätzliche Kühlleistung in das System eingespeist wird derart, dass die durch die Elektromobilitätskomponente zur Verfügung gestellte Antriebsleistung optimiert und somit die Antriebsleistung und/oder die Verfügbarkeit der Antriebsleistung erhöht wird und die Elektromobilitätskomponente im Durchlaufen und nach dem Durchlaufen der Fahrstrecke eine zulässige Grenztemperatur nicht überschreitet.

Das erfindungsgemäße Verfahren macht sich damit die im Allgemeinen als Problem angesehene thermische Trägheit des Systems aus Elektromobilitätskomponente und Kühlkreislauf vorteilhaft zu Nutze.

In vorteilhafter Weiterbildung des erfindungsgemäßen Verfahrens kann das Kühlvermögen des Systems aus Elektromobilitätskomponente und Kühlkreislauf mittels der Steuer- und Regeleinheit erfasst werden. Hierzu gibt es verschieden Möglichkeiten die weiter unten erläutert sind. Ist das Kühlvermögen bekannt, lässt sich dieses mittels der Steuer- und Regeleinheit, die in heute üblicher Weise ein computerbasiertes System ist, mit einem aus einem Lastprofil einer zukünftigen Fahrstrecke ermittelten Kühlprofils in Beziehung setzen. Zur Ermittlung des Lastprofils werden die Daten eines Navigationssystems verwendet, das auch über die Höhendaten und damit über die Daten des Geländeprofils verfügt. Ist das Geländeprofil bekannt, so lässt sich aus diesem und der Fahrzeugmasse das Lastprofil ermitteln, das aufgrund des bekannten Kühlvermögens des Systems in ein Kühlprofil übergeführt werden kann. Aus der Beziehung Ausgangskühlvermögen und Kühlprofil lassen sich, wie unten noch ausführlich beschrieben wird, Spitzenbelastungen des Kühlkreislaufs ermitteln, bei denen die Grenztemperatur der Elektromobilitätskomponente überschritten würde. Da diese Spitzenbelastungen auf die Fahrstrecke bezogen ermittelt werden, ist deren fahrstreckenmäßige, geografische Lage und damit auch zeitliche Lage bekannt. Um nun die Spitzenbelastungen des Kühlsystems abzudecken, wird mittels des erfindungsgemäßen Verfahrens fahrstreckenbezogen, zeitlich vor diesen Spitzenbelastungen des Kühlkreislaufs, vorausschauend mittels wenigstens eines im Kühlkreislauf vorgesehenen Wärmetauschers zusätzliche Kühlleistung in das System eingespeist. Durch diese zusätzliche Kühlleistung wird die Temperatur der Elektromobilitätskomponente, ebenso wie die Temperatur des Kühlmittelkreislaufes unter das im Augenblick notwendige Maß herabgesetzt. Durch das Herabsetzen der Temperatur erhöht sich die verfügbare Wärmekapazität, die durch das System aus Kühlkreislauf und Elektromobilitätskomponente zur Verfügung gestellt wird, beträchtlich, so dass die Antriebsleistung zur Bewältigung der Fahrstrecke in vorteilhafter Weise optimiert zur Verfügung steht. Gleichzeitig wird erreicht, dass im Durchlaufen und nach dem Durchlaufen der Fahrstrecke eine zulässige Grenztemperatur, bei der die Elektromobilitätskomponente geschädigt würde, nicht überschritten wird.

Als weitere vorteilhafte Weiterbildung des erfindungsgemäßen Verfahrens kann in der Steuer- und Regeleinheit ein das System aus Elektromobilitätskomponente und Kühlkreislauf wärmetechnisch repräsentierendes Modell vorgesehen sein, das das Kühlvermögen des Systems abbildet. Solche Modelle, die üblicherweise softwarebasiert sind, werden in der Technik in großem Umfang vorteilhaft dazu benutzt, technische Abläufe nachzubilden, in der Weise, dass das softwarebasierte Modell in Abhängigkeit von Startbedingungen die Zustände abbildet, die das reale System durchlaufen würde, wenn äußere Einflüsse auf dieses wirken. Im vorliegenden Fall werden dem besagten Modell zumindest die wichtigsten das Kühlvermögen des Systems beeinflussenden Größen als Eingangsgrößen zur Verfügung gestellt, um die Startbedingung zu definieren. Das Modell ist einer Prognoseeinheit zugeordnet, bzw. in dieser enthalten, die in Abhängigkeit von einem Geländeprofil einer zukünftigen Fahrstrecke, ein Lastprofil ermittelt. Das Geländeprofil wird der Prognoseeinheit, wie oben erwähnt, von einem Navigationssystem zur Verfügung gestellt, die daraus das angesprochene Lastprofil ermittelt, aus dem wiederum die für die Elektromobilitätskomponente notwendigen zukünftigen Kühlbedarfe abgeleitet werden. Zur Ermittlung des Lastprofils sind unterschiedliche Vorgehensweisen denkbar, eine dieser Möglichkeiten wird weiter unten beispielhaft aufgezeigt. Auch die Prognoseeinheit ist, wie heute üblich und vorteilhaft, softwarebasiert ausgebildet, obgleich natürlich auch Hardwarelösungen denkbar sind. Aus den Modelldaten - im vorliegenden Fall den oben erwähnten Startbedingungen - und den Prognosedaten werden nun zum Beispiel in Simulationsläufen zukünftige zusätzliche Kühlbedarfe ermittelt. Diese zusätzlichen Kühlbedarfe werden mittels der Steuer- und Regeleinheit durch vorausschauendes Absenken der Kühlmitteltemperatur im Kühlkreislauf und der Temperatur der Elektromobilitätskomponente in das System eingespeist. Zu diesem Zweck kann beispielsweise der Durchfluss durch einen Wärmetauscher erhöht werden. Das vorausschauende Absenken der Temperatur im System aus Elektromobilitätskomponente und Kühlkreislauf erfolgt dabei zeitlich fahrstreckenbezogen so, dass wie oben bereits erwähnt, die Antriebsleistung zur Bewältigung der Fahrstrecke optimiert zur Verfügung steht und die Elektromobilitätskomponente im Durchlaufen und nach dem Durchlaufen der Fahrstrecke eine zulässige Maximaltemperatur nicht überschreitet.

Wie oben bereits angedeutet, gibt es unterschiedliche Möglichkeiten von einem Geländeprofil zu einem Lastprofil zu gelangen. Im gewählten Beispiel bedient sich die Prognoseeinheit einerseits des Geländeprofils, das die Höhendaten enthält und anderseits der Fahrzeugmasse. Die Fahrzeugmasse lässt sich dabei entweder messtechnisch zum Beispiel aus den Radaufstandskräften ermitteln oder sie kann in Form eines Eingabewertes manuell eingegeben werden. Darüber hinaus entwickelt die Prognoseeinheit aus der gemessenen Augenblicksgeschwindigkeit des Fahrzeugs als Startbedingung unter Zuhilfenahme der aus dem Navigationssystem verfügbaren, die Fahrzeuggeschwindigkeit beeinflussenden Informationen wie Höhendaten, Straßenführung, Straßenkategorie, Geschwindigkeitsbeschränkungen etc. ein fiktives Geschwindigkeitsprofil, aus diesem Geschwindigkeitsprofil lassen sich alle Beschleunigungs- und Bremsvorgänge ablesen. Aus der Fahrzeugmasse, dem Geländeprofil, das die Steigungs- und Gefällstrecken definiert und dem Geschwindigkeitsprofil lässt sich die Lastverteilung entlang der vom Navigationssystem ermittelten Fahrstrecken, bezogen auf diese ermitteln. Diese fahrstreckenbezogene Lastverteilung stellt das Lastprofil dar.

In Vereinfachung der vorstehend dargestellten Verfahrensweise kann das Geschwindigkeitsprofil durch eine Durchschnittsgeschwindigkeit ersetzt werden, wodurch sich der Aufwand für die Ermittlung des Lastprofils deutlich vermindert.

Je nach Anwendungsfall kann es sogar ausreichend sein, das Lastprofil durch einen diskreten Lastwert zu ersetzen, aus dem der Kühlbedarf für den zu durchfahrenden Teil einer Fahrstrecke ableitbar ist. Setzt man diesen in Beziehung zum Kühlvermögen des Systems aus Elektromobilitätskomponente und Kühlkreislauf, ergibt sich ein eventueller zusätzlicher Kühlbedarf, zu dessen Befriedigung vor dem Durchfahren der Wegstrecke zusätzliche Kühlleistung in das System eingekoppelt werden kann.

Erfindungsgemäß weist die Elektromobilitätskomponente wenigstens einen Energiespeicher und wenigstens einen Elektromotor auf, während der Kühlkreislauf wenigstens einen Wärmetauscher enthält. Bei dieser Konstellation werden in vorteilhafter Weiterbildung des erfindungsgemäßen Verfahrens dem Modell zur Nachbildung des Systems wenigstens die Temperatur des Energiespeichers, die Temperatur des Elektromotors, die Temperatur des Kühlmittels und die Außentemperatur als Startbedingungen zur Verfügung gestellt, während die Wärmekapazität des Energiespeichers, die Wärmekapazität des Elektromotors, die Wärmekapazität des Kühlmittels im Kühlkreislauf und das Wärmeabführvermögen des wenigstens einen Wärmetauschers als Systemgrößen in der Steuer- und Regeleinheit hinterlegt und damit verfügbar sind. In der oben beschriebenen Weise kann nun mit Hilfe des Geländeprofils durch die Prognoseeinheit diejenige Komponente ermittelt werden, die aufgrund der zu erwartenden Wärmeeinkopplung ihre Grenztemperatur erreicht. Durch das Absenken der Temperatur im Kühlkreislauf mittels des wenigstens einen Wärmetauschers in der ebenfalls vorstehend beschriebenen Weise wird das Erreichen der Grenztemperatur während und nach dem Durchlaufen der realen Wegstrecke vermieden.

Bei erfindungsgemäßen Systemen der vorstehend genannten Art, bei dem die Elektromobilitätskomponente wenigstens einen Energiespeicher und wenigstens einen Elektromotor enthält und bei dem der Kühlkreislauf wenigstens einen Wärmetauscher aufweist, ist es heute üblich, den Elektromotor auch im Generatorbetrieb zu betreiben. In dieser Betriebsart wird der Energiespeicher aufgeladen, wie dies bereits oben angesprochen ist. Weil bei diesem Rekuperationsbetrieb ebenfalls hohe Verlustleistungen anfallen, die in Form von Wärme in das System eingetragen werden, wird erfindungsgemäß das Verfahren auch auf diesen Betriebsfall angewendet. Hierzu ist das Verfahren so ausgebildet, dass auch in diesem Fall mit Hilfe des Geländeprofils ermittelt wird, ob und wenn ja, wann eine Teilkomponente der Elektromobilitätskomponente aufgrund der zu erwartende Wärmeeinkopplung ihre Grenztemperatur erreichen würde. Im Bedarfsfall ermittelt das Verfahren sodann in der bereits beschriebenen Weise fahrstreckenbezogenen zusätzliche Kühlbedarfe und senkt die Temperatur im Kühlkreislauf mittels des wenigstens einen Wärmetauschers vorausschauend so weit, dass diese Grenztemperatur während und nach Durchlaufen des Geländeprofils auch im Rekuperationsbetrieb durch die gefährdete Komponente nicht erreicht wird.

Die Teile einer Elektromobilitätskomponente, wie beispielsweise der vorstehend angesprochene Motor-Generator oder der Energiespeicher, können völlig unterschiedliche zulässige Betriebstemperaturbereiche aufweisen und müssen in diesem Fall über jeweils wenigstens einen eigenen Kühlkreislauf mit wenigstens einem Wärmetauscher verfügen. Bei derartigen Anordnungen ist es selbstverständlich notwendig und vorteilhaft, das erfindungsgemäße Verfahren auf jeden der Teilkreisläufe anzuwenden, wenn es bei den diesem Teilkreislauf zugeordneten Komponenten zu einer Überschreitung der Grenztemperatur kommen kann.

Das erfindungsgemäße Verfahren weiterbildend ist es von Vorteil, die Absenkung der Kühlmitteltemperatur vorausschauend in Betriebsphasen mit prognostizierter geringer thermischer Beanspruchung zu legen, um eine optimierte Wärmeabführung aus dem Kühlmittelkreislauf zu gewährleisten. Bedingung ist natürlich auch hier, dass die Absenkung der Kühlmitteltemperatur zeitlich nahe an der Phase erhöhter thermischer Beanspruchung des Kühlmittelkreislaufs liegt. Solche Phasen lassen sich ebenfalls aus dem Geländeprofil mittels der Prognoseeinheit ermitteln.

Bekanntermaßen ist das Durchfahren einer Fahrstrecke ein dynamischer Prozess, der einer Vielzahl von Einflussfaktoren unterliegt. Das können verkehrsbedingte, wetterbedingte oder auch fahrerbedingte Einflüsse sein, um nur einige zu nennen. Es ist daher nicht sinnvoll die Fahrstrecke, auf die das erfindungsgemäße Verfahren angewandt wird, besonders groß zu wählen. Man wird im Gegenteil vorteilhaft kleiner Fahrstreckenabschnitte aufeinanderfolgend dem Verfahren unterziehen, derart, dass die Prognoseeinheit in fortlaufender Folge aus jeweils einem voreinstellbaren Abschnitt der zukünftigen Fahrstrecke das Geländeprofil ermittelt und daraus ein Lastprofil erstellt, das sodann zur Ermittlung der zukünftigen Kühlbedarfe des jeweiligen Bereichs der zukünftigen Fahrstrecke herangezogen wird.

In Fällen, in denen während des realen Durchfahrens der Fahrstrecke vorstehend erwähnte äußere Einflüsse auftreten, die im Modell nicht berücksichtigt werden können, kann die Notwendigkeit gegeben sein, Korrekturen hinsichtlich der ermittelten Kühlbedarfe vorzunehmen. Es ist daher vorteilhaft das erfindungsgemäße Verfahren mit einem Korrekturmechanismus auszustatten. Der vorstehend angesprochen Fall tritt beispielsweise dann ein, wenn zeitlich nach der Feststellung der Startbedingungen für einen Fahrstreckenabschnitt fahrer- oder verkehrsbedingte Überholvorgänge oder Bremsvorgänge auftreten. Um in solchen Fällen Korrekturen vornehmen zu können, ist es in vorteilhafter Weiterbildung des erfindungsgemäßen Verfahrens vorgesehen, die Temperatur der Elektromobilitätskomponente bzw. deren Teilkomponenten als Ist-Temperatur bzw. Ist-Temperaturen zyklisch messtechnisch zu erfassen und mit einer aus dem Modell ermittelten Soll-Temperatur bzw. mit Soll-Temperaturen zu vergleichen. Ergeben sich Differenzen zwischen Ist-Temperatur(en) und Solltemperatur(en) ermittelt das gemäß diesem Merkmal weitergebildete Verfahren mittels eines softwarebasierten Korrekturmechanismus aus der ermittelten Differenz einen Korrekturfaktor für die Temperaturabsenkung des Kühlkreislaufs. Der angesprochene Korrekturmechanismus kann beispielsweise dadurch realisiert werden, dass ein Korrekturwertspeicher mit Hilfe der ermittelten Differenz adressiert wird, wobei unter den einzelnen Speicheradressen Korrekturwerte abgelegt sind, die der jeweiligen Differenz entsprechen. Derartige Speichermechanismen sind als Kennlinienspeicher oder Kennfeldspeicher bekannt. Im Fall von Kennfeldspeichern können zwei oder mehr Temperaturdifferenzen von zwei oder mehr Teilkomponenten zu Korrekturzwecken berücksichtigt werden.

Erfindungsgemäß wird mittels des erfindungsgemäßen Verfahrens eine Signalvorrichtung angesteuert, die dem Fahrzeugführer zumindest die Phasen der Spitzenbelastungen des Kühlkreislaufs signalisiert. Auf diese Weise kann der Fahrzeugführer durch entsprechende vorausschauende Fahrweise den Kühlbedarf vor dem Erreichen der Spitzenbelastung minimieren, so dass zusätzliche Kühlleistung vor dem Eintreten der Spitzenbelastung verfügbar wird und in das System eingekoppelt werden kann. Dazu ist es wichtig, dass die Signalisierung zeitlich bzw. fahrstreckenmäßig vor dem Eintreten des Ereignisses erfolgt.

Erfindungsgemäß ist vorgesehen, dass die Elektromobilitätskomponente Teil eines Hybridantriebes bestehend aus der Elektromobilitätskomponente und einem Verbrennungsmotor ist, und dass der jeweils wenigstens eine Wärmetauscher im Kühlkreislauf der Elektromobilitätskomponente wärmetechnisch mit dem Kühlkreislauf des Verbrennungsmotors gekoppelt ist, wobei das Absenken der Kühlmitteltemperatur im Kühlkreislauf der Elektromobilitätskomponente vorausschauend in wenigstens einer Betriebsphase mit geringer thermischer Beanspruchung des wenigstens einen Kühlkreislauf des Verbrennungsmotors erfolgt, derart dass die Absenkung der Kühlmitteltemperatur zeitlich bzw. fahrstreckenmäßig nahe an der darauf folgenden Phase erhöhter thermischer Beanspruchung des wenigstens einen Kühlmittelkreislauf der Elektromobilitätskomponente liegt, wobei Betriebsphasen mit geringer thermischer Beanspruchung des wenigstens einen Kühlkreislauf des Verbrennungsmotors aus der zukünftigen Fahrstrecke ermittelt werden. Um die verfügbare Kühlleistung zu erhöhen, ist weiter erfindungsgemäß vorgesehen, dass der wenigstens eine Kühlkreislauf der Elektromobilitätskomponente wärmetechnisch mit dem Kühlkreislauf einer Kältemaschine gekoppelt und bedarfsweise zumindest ein Teil der Wärmemenge aus dem Kühlkreislauf der Elektromobilitätskomponente in den Kältekreislauf der Kältemaschine abgeführt werden kann, um die vorausschauende, durch die Prognoseeinheit ermittelte Temperaturabsenkung im Kühlkreislauf der Elektromobilitätskomponente zu erreichen. Solche Kältemaschinen stehen in den meisten heute gebräuchlichen Kraftfahrzeugen insbesondere auch Nutzfahrzeugen ohnehin zur Verfügung, um im Bedarfsfall den Innenraum bzw. die Fahrerkabine zu kühlen. Aufgrund der Pufferwirkung des relativ großen Innenraumvolumens kann ein nachhaltiger Komfortverlust für Fahrer bzw. Fahrgäste ausgeschlossen werden.

Wie bei allen technischen Systemen lassen sich Fehlfunktionen des erfindungsgemäßen Verfahrens ebensowenig ausschließen, wie das Auftreten von Betriebszuständen die, trotz vorausschauender Kühlung, das Überschreiten der Grenztemperatur der Elektromobilitätskomponente oder einer Teilkomponente zur Folge haben. Für solche Fälle ist erfindungsgemäß eine von dem erfindungsgemäßen Verfahren ansteuerbare Leistungsmodulationseinrichtung vorgesehen ist. Diese reduziert erfindungsgemäß in Fällen, in denen aufgrund der zukünftigen Fahrstrecke, insbesondere aufgrund gemessener Temperatur-Istwerte und/ oder des Geländeprofils, die Grenztemperatur zumindest einer Teilkomponente auch nach Absenken der Temperatur im Kühlkreislauf überschritten würde, die Leistung der Elektromobilitätkomponente so weit, dass diese Grenztemperatur nach Absenken der Temperatur im Kühlsystem nicht erreicht wird.

Um das erfindungsgemäße Verfahren durchzuführen, wird man sich wie heute üblich computergestützter Technologien bedienen, die nachfolgend aufgezeigte vorteilhafte Anordnung zur Durchführung des Verfahrens benennt daher nur Funktionseinheiten, die in einer Steuer- und Regeleinheit bevorzugt als Softwaremodule realisiert sind, aber auch Hardwarekomponenten enthalten können.

Zunächst ist eine Ist-Zustand-Erfassungseinheit vorgesehen, die unter Zuhilfenahme von durch Sensoren gewonnenen Messwerten zyklisch einen Wert ermittelt, der die zum Erfassungszeitpunkt aktuelle Kühlleistung des Systems aus Kühlkreislauf und Elektromobilitätskomponente beschreibt.

Weiter ist eine Navigationseinheit notwendig, die ein Geländeprofil und weitere die benötigte Antriebsleistung der Elektromobilitätskomponente beeinflussende Daten für eine zukünftige Fahrstrecke enthält.

Um ein Kühlprofil für die zukünftige Fahrstrecke zu ermitteln, ist eine Prognoseeinheit vorgesehen. Diese erzeugt aus dem Geländeprofil und den weiteren die benötigte Antriebsleistung beeinflussenden Daten ein Lastprofil einer zukünftigen Fahrstrecke, wie dies bereits oben beschrieben ist. Ausgehend von dem durch die Ist-Zustand-Erfassungseinheit ermittelten Ausgangswert als Startkühlleistung und dem Lastprofil ermittelt die Prognoseeinheit sodann das Kühlprofil der zukünftigen Fahrstrecke in einem Simulationslauf.

Zur Ermittlung der zusätzlichen Kühlbedarfe ist eine Auswerteeinheit vorgesehen, die aus dem Kühlprofil und einer in der Steuer- und Regeleinheit wertmäßig verankerten maximalen Kühlleistung, diese zusätzlichen Kühlbedarfe ermittelt. Dies geschieht sowohl hinsichtlich ihrer Größe als auch ihrer Lage entlang der zukünftigen Fahrstrecke bzw. des Zeitraums, in dem sie verfügbar sein müssen. Die Auswerteeinheit verschiebt nun diese zusätzlichen Kühlbedarfe in Fahrstreckenbereiche die vor denen liegen an denen sie benötigt werden und erzeugt aus dem ursprünglichen Kühlprofil ein modifiziertes Kühlprofil.

Zur Ansteuerung von die Kühlleistung regulierenden, insbesondere erhöhenden Mitteln ist eine Ansteuereinheit vorgesehen, der das modifizierte Kühlprofil als Eingangsinformation dient, sodass die zusätzlichen Kühlbedarfe in das System aus Kühlkreislauf und Elektromobilitätskomponente vor dem Zeitraum einspeist werden, zu dem sie benötigt werden.

Weiter erfolgt erfindungsgemäß sowohl hinsichtlich des Geländeprofils als auch hinsichtlich der weiteren den Kühlbedarf beim Durchfahren der zukünftigen Strecke beeinflussenden Parametern eine Aufteilung in Kategorien, wobei diese Kategorien als diskrete Werte der Prognoseeinheit der Steuer- und Regeleinheit zur Verfügung gestellt werden, um daraus ausgehend von einem durch die Ist-Zustand-Erfassungseinheit ermittelten Ausgangswert als Startkühlleistung das Prognose-Kühlprofil zu erstellen.

Das oben beschriebene Verfahren sowie die vorstehend beschriebene Anordnung lassen sich vorteilhaft allgemein in Fahrzeugen, insbesondere in Nutzfahrzeugen, einsetzen.

Weitere Ausgestaltungen und Vorteile der Erfindung werden nachfolgend anhand einiger Schaubilder näher erläutert, es zeigen:
- Fig.1: Eine Prinzipdarstellung einer Anordnung zum vorausschauenden T em peraturmanagement,
- Fig. 2: Diagramme, die ein Kühlprofil, ein daraus erzeugtes modifiziertes Kühlprofil, sowie den Temperaturverlauf an der überwachten Elektromobilitätskomponente zeigen, wobei hier keine Aufteilung in Kategorien erfolgt und somit nicht von der Erfindung umfasst ist, und
- Fig. 3: Diagramme, die ein erfindungsgemäßes gestuftes Prognose-Kühlprofil und ein daraus erzeugtes modifiziertes gestuftes Kühlprofil zeigen.

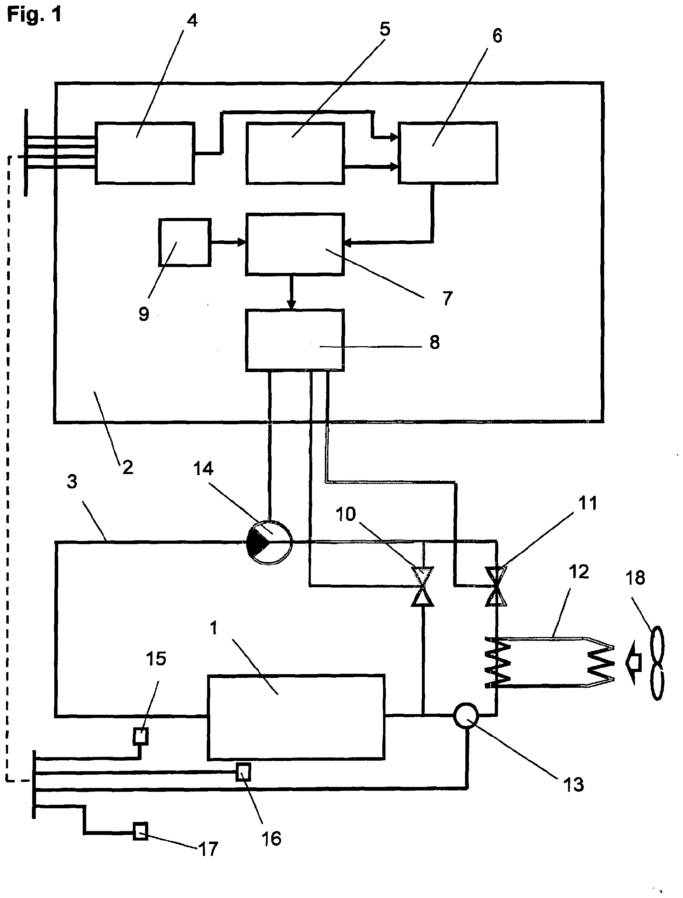

In Figur 1 ist schematisch eine Elektromobilitätskomponente 1 dargestellt, die mittels eines Kühlkreislaufs 3 gekühlt ist. Gesteuert wird der Durchfluss durch den Kühlkreislauf von einer Steuer- und Regeleinheit 2, wie dies später noch ausführlich beschrieben wird. Die Steuer-und Regeleinheit 2 enthält eine Ist-Zustand-Erfassungseinheit 4, eine Navigationseinheit 5, eine Prognoseeinheit 6, eine Auswerteeinheit 7, einen Speicher 8 und eine Ansteuereinheit 9. Zur Einstellung des Kühlmitteldurchflusses durch den Kühlkreislauf sind eine Kühlmittelpumpe 14 ein erstes Kühlmittelventil 10 und ein zweites Kühlmittelventil 11 vorgesehen, wobei das erste Kühlmittelventil 10 den Durchfluss durch einen Bypass zu einem Wärmetauscher 12 steuert, und das zweite Kühlmittelventil 11 den Durchfluss durch den Wärmetauscher 12. Bei dem Wärmetauscher 12 handelt es sich um einen Kühlmittel-Luft-Wärmetauscher, der durch die Außenluft gekühlt wird, wobei aus Vereinfachungsgründen angenommen ist, dass es sich bei dem die Kühlung bewirkenden, mittels Kühlerventilator 18 erzeugten Luftstrom um einen konstanten Luftstrom handelt. Zur Temperaturermittlung sind einige Temperatursensoren vorgesehen, davon misst der erste Temperatursensor 15 die Kühlmitteltemperatur im Kühlkreislauf, der zweite Temperatursensor 16 die Temperatur der Elektromobilitätskomponente 1 und der dritte Temperatursensor 17 die Außentemperatur.

Für die nachfolgende Betrachtung der Funktionsweise der in Figur 1 dargestellten Anordnung wird angenommen, dass sich die Elektromobilitätskomponente 1 bereits im Betrieb befindet. Ob es sich bei der Elektromobilitätskomponente 1 um einen reinen Elektroantrieb oder um die Elektromobilitätskomponente eines Hybridsystems handelt, ist dabei zunächst unerheblich, wobei erfindungsgemäß die Elektromobilitätskomponente Teil eines Hybridantriebes ist.

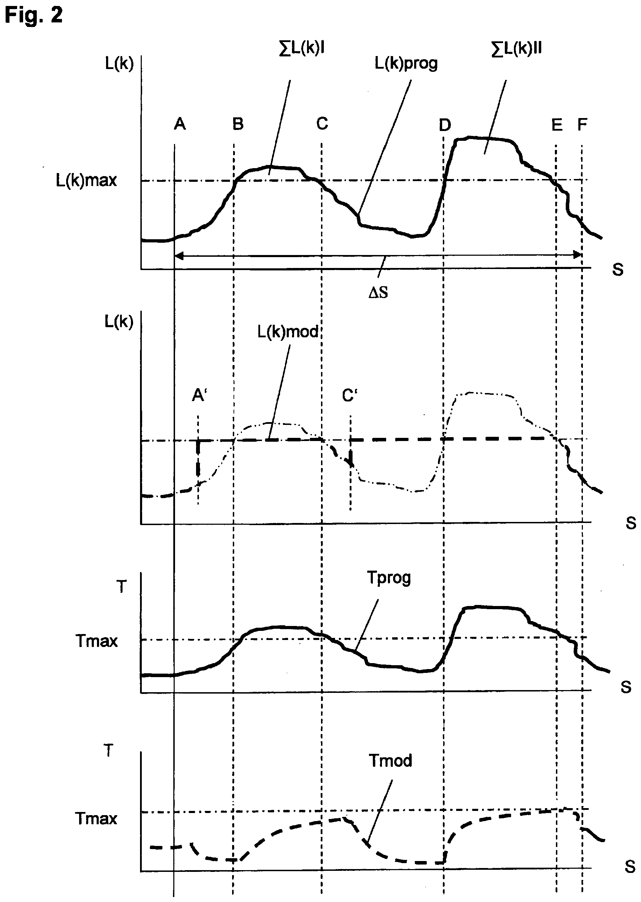

Bei der nachfolgenden Beschreibung der Figur 2 erfolgt keine Aufteilung in Kategorien hinsichtlich des Geländeprofils und hinsichtlich der weiteren den Kühlbedarf beim Durchfahren der zukünftigen Strecke beeinflussenden Parametern, was nicht von der Erfindung umfasst ist, jedoch als Beispiel, um die Erfindung zu verstehen, aufgenommen ist.

Um die aktuell vom Kühlsystem aufgebrachte Kühlleistung zu ermitteln, fragt die Ist-Zustand-Erfassungseinheit 4 über die Temperatursensoren 15, 16 und 17 die Temperatur des Kühlmittels im Kühlkreislauf 3, die Temperatur der Elektromobilitätskomponente 1, die Außentemperatur sowie die Kühlmittel-Durchflussmenge durch den Wärmetauscher 12 mittels des Durchflussmessers 13 zyklisch ab. Mithilfe der vorstehenden Temperaturmesswerte und der in der Ist-Zustand-Erfassungseinheit 4 vorgehaltenen Informationen über die Wärmekapazität des Kühlmittels, die Wärmekapazität der Elektromobilitätskomponente 1 sowie der ebenfalls vorgehaltenen Informationen über das durchflussabhängige Wärmeabfuhrvermögen des Wärmetauschers errechnet die Ist-Zustand-Erfassungseinheit 4 sodann die aktuelle Kühlleistung des Kühlkreislauf 3.

Parallel zu diesem Vorgang wird mittels der Navigationseinheit 5 eine zukünftige Fahrstrecke ausgewählt, die das Fahrzeug durchfahren wird. Die Navigationseinheit 5 ist dabei so gestaltet, dass sie neben den reinen Navigationsdaten auch die Höheninformationen zu der Fahrstrecke, sowie weitere die Antriebsleistung beeinflussende Daten verfügbar hält. Bei diesen weiteren Daten kann es sich um Verkehrsinformationen (zum Beispiel stockender Verkehr), um Geschwindigkeitsbeschränkungen, Informationen zur Straßenkategorie usw. handeln.

Die vorstehend angesprochenen in der Navigationseinheit 5 vorhandenen Informationen, einschließlich einem aus den Höhendaten gewonnenen Geländeprofil der ausgewählten Fahrstrecke, werden der Prognoseeinheit 6 zur Verfügung gestellt, die aus diesen Informationen zunächst ein Leistungsprofil erzeugt. Unter Zuhilfenahme der durch die Ist-Zustand-Erfassungseinheit 4 ermittelten aktuellen Kühlleistung als Startbedingung wird nun das Leistungsprofil durch die Prognoseeinheit 6 in ein Kühlprofil übergeführt. Das Kühlprofil ist dabei so beschaffen, dass es für jeden Punkt der ausgewählten Fahrstrecken die erforderliche Kühlleistung zeigt.

Um nun aus dem Kühlprofil zusätzliche Kühlbedarfe ableiten zu können, wird dieses Kühlprofil der Auswerteeinheit 7 übermittelt, die das Kühlprofil mit einer im Speicher 8 abgelegten maximalen Kühlleistung in Beziehung setzt. Die maximale Kühlleistung kann eine Variable sein, die zum Beispiel von der Außentemperatur abhängt. Das Ergebnis der Auswertung durch die Auswerteeinheit 7 ist eine Information darüber, an welchem Punkt der Strecke und um welchen Betrag die maximale Kühlleistung überschritten wird. Mit dieser Information erzeugt die Auswerteeinheit 7 ein modifiziertes Kühlprofil, der Art, dass die Kühlleistungsanteile, die die maximale Kühlleistung übersteigen, vorgelagert, also vor dem Zeitpunkt zu dem die notwendige Kühlleistung die maximale Kühlleistung übersteigen würde, in das Kühlprofil eingefügt werden.

Dieses angesprochene modifizierte Kühlprofil wird nun an die Ansteuereinheit 9 weitergegeben. Über ihre Ausgänge steuert die Ansteuereinheit 9 die Kühlmittelpumpe 14, sowie das erste Kühlmittelventil 10 und das zweite Kühlmittelventil 11 so, dass die Temperatur im Kühlkreislauf vorausschauend abgesenkt wird, derart, dass die zusätzlichen Kühlbedarfe durch die abgesenkte Temperatur des Kühlkreislaufs 3 sowie die abgesenkten Temperatur der Elektromobilitätskomponente 1 ausgeglichen werden.

Um die vorstehenden Abläufe zu veranschaulichen, wird im Folgenden auf die in Figur 2 dargestellten Diagramme zurückgegriffen. Dort ist im oberen Diagramm ein Kühlprofil L(k)prog dargestellt, wie es von der Prognoseeinheit 6 aus Fig. 1 ermittelt wird. Dabei ist auf der Abszisse eine Fahrstrecke s aufgetragen während auf der Ordinate die Kühlleistung L(k) aufgetragen ist. Die durchgezogene Linie zeigt nun das Kühlprofiel L(k)prog, in der Weise, dass an jedem Punkt der Fahrstrecke s die jeweils benötigte Kühlleistung ablesbar ist.

Bei der Erzeugung des Kühlprofils, zum Beispiel im Wege einer Simulation, wird die bei Kühlkreisläufen der hier angesprochenen Art übliche Regelstrategie angewandt. Diese sieht vor, immer so viel Kühlleistung zur Verfügung zu stellen, wie aktuell benötigt wird.

Mittels Strichpunkt-Linie ist im oberen Diagramm weiter die durch den Kühlkreislauf maximal darstellbare Kühlleistung L(k)max eingetragen. Setzt man nun die maximal darstellbare Kühlleistung L(k)max in Beziehung zum Kühlprofil L(k)prog, wird erkennbar, dass zwischen den Punkten B und C sowie zwischen den Punkten D und E die maximal verfügbare Kühlleistung L(k)max überschritten wird. Das bedeutet, dass der Kühlbedarf ΣL(k)I und der Kühlbedarf ΣL(k)II nicht abgedeckt sind.

Davon ausgehend, dass das ausgewählte Stück der Fahrstrecke ΔS zwischen den Punkten A und F liegt, wird andererseits sichtbar, dass zwischen den Punkten A und B, sowie zwischen den Punkten C und D Potenzial für zusätzliche Kühlung vorhanden ist. Wird demnach die Kühlleistung zwischen den Punkten A' und B sowie Zwischen C' und D auf das Maximum L(k)max erhöht, wie durch die gestrichelten Linie im zweiten Diagramm dargestellt ist, lassen sich der zusätzliche Kühlbedarf ΣL(k)I und der zusätzliche Kühlbedarf ΣL(k)II vorausschauend vorhalten. Vorausgesetzt wird dabei, dass der Kühlkreislauf und die Elektromobilitätskomponente in der Lage sind diese zusätzlichen Kühlbedarfe durch Temperaturabsenkung mittels Ihrer Wärmekapazität zu speichern.

Die vorstehend angesprochene gestrichelte Linie im zweiten Diagramm der Fig. 2 stellt demnach das oben erwähnte modifizierte Kühlprofil L(k)mod dar. Aus diesem Diagramm geht weiter hervor, dass die erforderliche Kühlleistung unter der maximal realisierbaren Kühlleistung L(k)max bleibt, oder diese maximal erreicht. Dargestellt ist die maximal realisierbare Kühlleistung L(k)max auch in diesem Diagramm durch eine strichpunktierte Linie.

Übertragen auf die Temperaturverhältnisse der Elektromobilitätkomponente 1 ergibt sich das in der Figur 2 jeweils in den Diagrammen drei und vier dargestellte Bild. Dabei zeigt das dritte Diagramm in durchgezogener Linie den Temperaturverlauf Tprog in der Elektromobilitätskomponente 1, wie er eintreten würde, wenn so gekühlt würde, wie es das prognostizierte Kühlprofil L(k)prog vorgibt. Zwischen den Punkten B und C sowie zwischen den Punkten D und E käme es zu einer Überschreitung der als Strichpunktlinie dargestellten maximal zulässigen Temperatur Tmax, was eine Schädigung der Elektromobilitätskomponente 1 zur Folge hätte.

Wird hingegen so gekühlt, wie dies im modifizierten Kühlprofil L(k)mod gemäß dem zweiten Diagramm dargestellt ist, stellt sich ein Temperaturverlauf in der Elektromobilitätskomponente 1 ein, wie ihn das vierte Diagrammen der Figur 2 zeigt. Hier wird erkennbar, dass die nach Anwendung des Verfahrens sich an der Elektromobilitätskomponente 1 einstellenden Temperatur Tmod jeweils vor Auftreten des zusätzlichen Kühlbedarfs ΣL(k)I bzw. ΣL(k)II abgesenkt wird, der Art, dass die Temperaturkurve Tmod unterhalb der maximal zulässigen Temperatur Tmax bleibt bzw. diese nicht überschreitet.

Um die Komponenten der in Figur 1 dargestellten Steuer-und Regelanordnung 2 und mit ihr das Verfahren zu vereinfachen, wird bei dem erfindungsgemäßen Verfahren sowohl hinsichtlich des Geländeprofils als auch hinsichtlich der weiteren den Kühlbedarf beim Durchfahren der zukünftigen Fahrstrecke beeinflussenden Parameter, eine Aufteilung in Kategorien vorgenommen.

Für die Steuer-und Regeleinheit 2 gemäß Figur 1 bedeutet diese Aufteilung in Kategorien, dass der Aufwand für die Ist-Zustand-Erfassungseinheit 4, die Navigationseinheit 5 und die Prognoseeinheit 6 erheblich geringer ausfällt. An der prinzipiellen Durchführung des erfindungsgemäßen Verfahrens ändert sich dadurch hingegen nichts, die Temperaturabsenkung ist lediglich etwas größer zu wählen, um eventuelle Ungenauigkeiten auszugleichen.

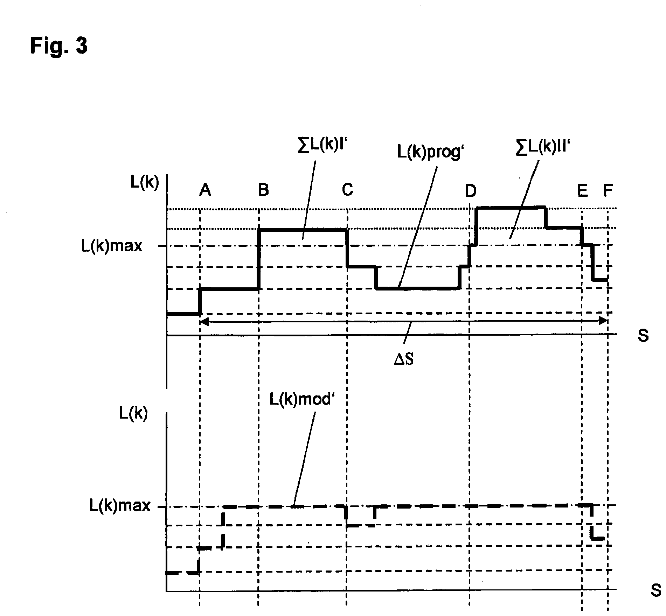

Veranschaulicht werden die Verhältnisse bei einer solchen erfindungsgemäßen Kategorienbildung nachfolgend unter Zuhilfenahme der Anordnung gemäß Figur 1 und der Diagramme gemäß Figur 3. Dort zeigt das obere Diagramm den Verlauf des durch die Prognoseeinheit 6 prognostizierten Kühlprofils L(k)prog' und das darunter dargestellte Diagramm den Verlauf des modifizierten Kühlprofils L(k)mod'. Aus den Darstellungen ist ersichtlich, dass insgesamt sechs Kühlleistungsstufen vorgesehen sind, von denen zwei im unzulässigen Bereich oberhalb von L(k)max liegen. Das bedeutet, dass die Navigationseinheit 5 sowohl hinsichtlich des Geländeprofils als auch hinsichtlich der übrigen das Kühlprofil beeinflussenden Parameter keine detaillierten Informationen vorhalten muss, sondern lediglich Kategorien. Diese Kategorien, zum Beispiel sechs, werden der Prognoseeinheit 6 als diskrete Werte zur Verfügung gestellt. Analog kann mit den durch die Ist-Zustand-Erfassungseinheit 4 zur Verfügung gestellten Ausgangskühlleistung verfahren werden. Auch hier sind zum Beispiel in vier Stufen eingeteilte Ausgangswerte denkbar. Die gestuften Ausgangswerte, sowohl der Ist-Zustand-Erfassungseinheit 4 als auch der Navigationseinheit 5 dienen der Prognoseeinheit 6 als Eingangswerte, aus denen diese das bereits angesprochene gestufte Prognose-Kühlprofil L(k)prog' erstellt.

Auch bei dem erfindungsgemäßen Verfahren wird bei der Erzeugung des modifizierten Kühlprofils so verfahren, dass die die maximale Kühlleistung L(k)max des Kühlkreislaufs 3 übersteigenden Kühlbedarfe ΣL(k)I′ und ΣL(k)II′ vorgelagert in das modifizierte Kühlprofil eingestellt werden und ein modifiziertes Kühlprofil L(k)mod' - in Fig. 3 das untere Diagramm - erzeugt wird.

Die Temperaturverhältnisse an der Elektromobilitätskomponente 1 stellen sich analog der Darstellung gemäß Figur 2 ein, so dass auf eine nochmalige Darstellung verzichtet wird.

Nachdem einer ersten zukünftigen Fahrstrecke, für die bereits das modifizierte Kühlprofil L(k)mod mittels des erfindungsgemäßen Verfahrens erzeugt wurde, eine zweite zukünftige Fahrstrecke folgen kann, an deren Anfang ein zusätzlicher Kühlbedarf abzudecken ist, besteht die Notwendigkeit, für diesen zusätzlichen Kühlbedarf der zweiten Fahrstrecke eine Temperaturabsenkung in der ersten Fahrstrecke vorzunehmen. Zu diesem Zweck ist es erforderlich, bei der Durchführung des erfindungsgemäßen Verfahrens immer zwei aufeinanderfolgende Fahrstreckenabschnitte zu betrachten. Dies kann in der Weise geschehen, dass das bereits erstellte Kühlprofil L(k)mod zwischengespeichert wird und dass dieses zwischengespeicherte Kühlprofile dann einer erneuten Modifikationen unterzogen wird, wenn ein zusätzlicher Kühlbedarf zu Beginn der nachfolgenden zweiten Fahrstrecke nicht abgedeckt werden kann. Im angesprochenen Fall ist die zur Abdeckung des zusätzlichen Kühlbedarfs erforderliche Temperaturabsenkung im Kühlkreislauf zeitlich, fahrstreckenbezogen an das Ende der ersten Fahrstrecke zu verlagern.

Beim Durchfahren einer Strecke unterliegt der Antrieb eines Fahrzeugs einer Vielzahl von Einflussfaktoren. Da nur die wichtigsten der möglichen Einflussfaktoren in dem erfindungsgemäßen Verfahren berücksichtigt werden können, kann es sinnvoll sein, die Steuer-und Regeleinheit 2 um einen Korrekturmechanismus (nicht dargestellt) zu erweitern. Ein solcher Korrekturmechanismus kann so ausgebildet sein, dass eine mittels der Ist-Zustand-Erfassungseinheit 4 erfasste Ist-Temperatur mit einer durch die Prognoseeinheit 6 ermittelte Soll-Temperatur verglichen wird. Kommt es bei diesem Vergleich zu Abweichungen, können notwendigenfalls Korrekturen an dem Kühlprofil für eine aktuell durchfahrene Wegstrecke vorgenommen werden. Auf nachfolgende Wegstrecken wirken sich solche Abweichungen zwischen Ist-Temperatur und Soll-Temperatur nicht aus, weil jede Ermittlung des Kühlprofils für eine vorausliegende Fahrstrecke mit den aktuellen Messwerten zur Feststellung der Anfangs- oder Startbedingung beginnt.

Um das Kühlvermögen des Kühlkreislaufes stark beeinflussende Vorgänge nach Möglichkeit dann zu minimieren, wenn zusätzliche Kühlbedarfe festgestellt werden, wird erfindungsgemäß dem Fahrzeugführer ein Signal zur Verfügung gestellt, das zusätzlichen Kühlbedarf für nachfolgende Fahrstrecken signalisiert. Hierzu wäre im Beispiel nach Figur 1 eine Information von der Prognoseeinheit 6 abzuleiten, da diese die zusätzlichen Kühlbedarfe ermittelt. Mit Hilfe dieser Information wird dann durch die Steuer- und Regeleinheit 2 ein Signalgeber (nicht dargestellt) angesteuert.

Mit dieser Signalisierung zusätzlicher Kühlbedarfe an den Fahrzeugführer wird erreicht, dass dieser Fahrmanöver, wie beispielsweise das zu diesem Zeitpunkt nicht unbedingt notwendige Überholen von Fahrzeugen, auf einen späteren Zeitpunkt verschiebt oder ganz unterlässt.

Das vorstehend beschriebene Verfahren bzw. die zur Durchführung des Verfahrens beispielhaft aufgezeigte Anordnung kann sowohl in Fahrzeugen mit rein elektrischem Antrieb - was nicht von der Erfindung umfasst ist -, als auch in solchen Fahrzeugen mit Hybridantrieb zur Anwendung kommen. Bei dem erfindungsgemäßen Verfahren mit einem Hybridfahrzeug, bei dem das Kühlsystem der Elektromobilitätskomponente mit dem Kühlsystem für den Verbrennungsmotor wärmetechnisch verbunden ist, werden zur Feststellung der verfügbaren Kühlleistung auch die Verhältnisse im Kühlkreislauf des Verbrennungsmotors berücksichtigt.

Zur Verbesserung der Kühlleistung ist es erfindungsgemäß in dem Beispiel gemäß Figur 1 vorgesehen, den Kühlkreislauf 3 thermisch mit einem Kühlkreislauf einer Kältemaschine (nicht dargestellt) zu koppeln. Derartige Kältemaschinen sind in Form von Klimaanlagen sowohl in Personenfahrzeugen als auch in Nutzfahrzeugen üblicherweise vorhanden, um den Fahrgastraum bzw. das Fahrerhaus zu kühlen. Gesteuert durch die Ansteuereinheit 9 kann über eine solche Kopplung zusätzliche Kühlleistung in den Kühlkreislauf 3 eingebracht werden, um eine für die Abdeckung zusätzlicher zukünftige Kühlbedarfe notwendige Temperaturabsenkung des Kühlkreislauf 3 und der Elektromobilitätskomponente 1 zu erreichen.

Eingesetzt werden können das im vorstehenden beschriebene Verfahren sowie die Anordnung zur Durchführung des Verfahrens sowohl in Personenfahrzeugen als auch in Nutzfahrzeugen, insbesondere in Lastkraftwagen. Selbstverständlich sind neben den vorstehend beschriebenen Ausführungsformen des erfindungsgemäßen Verfahrens und der Anordnung weiter Abwandlungen und Ausführungsalternativen denkbar, so dass den beschriebenen Ausführungsformen nur Beispielcharakter zukommt.

### Bezugszeichenliste

- 1: Elektromobilitätskomponente
- 2: Steuer- und Regeleinheit
- 3: Kühlkreislauf
- 4: Ist-Zustand-Erfassungseinheit
- 5: Navigationseinheit
- 6: Prognoseeinheit
- 7: Auswerteeinheit
- 8: Speicher
- 9: Ansteuereinheit
- 10: erstes Kühlmittelventil
- 11: zweites Kühlmittelventil
- 12: Wärmetauscher
- 13: Durchflussmesser
- 14: Kühlmittelpumpe
- 15: erster Temperatursensor
- 16: zweiter Temperatursensor
- 17: dritter Temperatursensor
- 18: Kühlerventilator
- L(k)prog: prognostiziertes Kühlprofil
- L(k)mod: modifiziertes Kühlprofil
- L(k)max: maximal verfügbare Kühlleistung
- ΣL(k)I: erster zusätzlicher Kühlbedarf
- ΣL(k)II: zweiter zusätzlicher Kühlbedarf

## Patentansprüche

1. Verfahren zur Optimierung der motorischen Verfügbarkeit einer mittels Kühlkreislauf gekühlten Elektromobilitätskomponente (1),
wobei die Elektromobilitätskomponente (1) wenigstens einen Energiespeicher und wenigstens einen Elektromotor aufweist, die über jeweils wenigstens einen eigenen Kühlkreislauf (3) mit wenigstens einem Wärmetauscher (12) verfügen,
wobei die Elektromobilitätskomponente (1) Antriebsleistung in einem Fahrzeug einspeist, wobei eine Steuer- und Regeleinheit (2) aus einer zukünftigen Fahrstrecke Spitzenbelastungen des Kühlkreislaufs (3) ermittelt und wobei fahrstreckenbezogen zeitlich vor diesen Spitzenbelastungen des Kühlkreislaufs (3) vorausschauend mittels des wenigstens einen im Kühlkreislauf (3) vorgesehenen Wärmetauschers (12) zusätzliche Kühlleistung in das System eingespeist wird derart, dass die durch die Elektromobilitätskomponente (1) zur Verfügung gestellte Antriebsleistung optimiert und somit die Antriebsleistung und/oder die Verfügbarkeit der Antriebsleistung erhöht wird und die Elektromobilitätskomponente (1) im Durchlaufen und nach dem Durchlaufen der Fahrstrecke eine zulässige Grenztemperatur nicht überschreitet und diese Grenztemperatur während und nach Durchlaufen der Fahrstrecke auch im Rekuperationsbetrieb nicht erreicht wird,
und wobei die Elektromobilitätskomponente (1) Teil eines Hybridantriebes bestehend aus der Elektromobilitätskomponente (1) und einem Verbrennungsmotor ist, und
wobei der jeweils wenigstens eine Wärmetauscher (12) im Kühlkreislauf (3) der Elektromobilitätskomponente (1) wärmetechnisch mit dem Kühlkreislauf des Verbrennungsmotors gekoppelt ist, wobei das Absenken der Kühlmitteltemperatur im Kühlkreislauf (3) der Elektromobilitätskomponente (1) vorausschauend in wenigstens einer Betriebsphase mit geringer thermischer Beanspruchung des wenigstens einen Kühlkreislauf des Verbrennungsmotors erfolgt, derart dass die Absenkung der Kühlmitteltemperatur zeitlich vor der darauf folgenden Phase erhöhter thermischer Beanspruchung des wenigstens einen Kühlmittelkreislauf (3) der Elektromobilitätskomponente (1) liegt, wobei Betriebsphasen mit geringer thermischer Beanspruchung des wenigstens einen Kühlkreislauf des Verbrennungsmotors aus der zukünftigen Fahrstrecke ermittelt werden,
wobei sowohl hinsichtlich des Geländeprofils als auch hinsichtlich der weiteren den Kühlbedarf beim Durchfahren der zukünftigen Strecke beeinflussenden Parametern eine Aufteilung in Kategorien erfolgt, wobei diese Kategorien als diskrete Werte einer Prognoseeinheit (6) der Steuer- und Regeleinheit (2) zur Verfügung gestellt werden, um daraus ausgehend von einem durch eine Ist-Zustand-Erfassungseinheit (4) ermittelten Ausgangswert als Startkühlleistung das Prognose-Kühlprofil zu erstellen, und
wobei eine Leistungsmodulationseinrichtung vorgesehen ist, wobei diese in Fällen in denen aufgrund der zukünftigen Fahrstrecke die Grenztemperatur zumindest einer Teilkomponente auch nach Absenken der Temperatur im Kühlsystem überschritten würde, die Leistung der Elektromobilitätkomponente (1) so weit reduziert, dass diese Grenztemperatur nach Absenken der Temperatur im Kühlsystem nicht erreicht wird, und
wobei eine Signalvorrichtung vorgesehen ist, die dem Fahrzeugführer zumindest die Phasen der Spitzenbelastungen des Kühlkreislaufs signalisiert, und dass die Signalisierung zeitlich vor dem Eintreten der Spitzenbelastung erfolgt.

2. Verfahren nach Anspruch 1, **dadurch gekennzeichnet, dass** die Steuer- und Regeleinheit (2) das Kühlvermögen des Systems aus Elektromobilitätskomponente (1) und Kühlkreislauf (3) erfasst und mit einem aus einem Lastprofil einer zukünftigen Fahrstrecke ermittelten Kühlprofil in Beziehung setzt derart, dass Spitzenbelastungen des Kühlkreislaufs ermittelt werden bei denen die Grenztemperatur der Elektromobilitätskomponente (1) überschritten würde und dass zeitlich vor diesen Spitzenbelastungen des Kühlkreislaufs (3) vorausschauend mittels wenigstens eines im Kühlkreislauf (3) vorgesehenen Wärmetauschers (12) zusätzliche Kühlleistung in das System eingespeist wird derart, dass die durch die Elektromobilitätskomponente (1) zur Verfügung gestellte Antriebsleistung optimiert wird und die Elektromobilitätskomponente (1) im Durchlaufen und nach dem Durchlaufen der Fahrstrecke eine zulässige Grenztemperatur nicht überschreitet.

3. Verfahren nach Anspruch 2, **dadurch gekennzeichnet, dass** in der Steuer- und Regeleinheit (2) ein das System aus Elektromobilitätskomponente (1) und Kühlkreislauf (3) wärmetechnisch repräsentierendes Modell vorgesehen ist, das das Kühlvermögen des Systems abbildet, wobei diesem Modell zumindest die wichtigsten das Kühlvermögen des Systems beeinflussenden Größen als Eingangsgrößen dienen und wobei das Modell der Prognoseeinheit (6) zugeordnet ist, die in Abhängigkeit von zumindest einem aus einem Geländeprofil einer zukünftigen Fahrstrecke ermittelten Lastprofil für die Elektromobilitätskomponente (1) zukünftige Kühlbedarfe ermittelt und wobei aus Modelldaten und Prognosedaten zukünftige zusätzliche Kühlbedarfe ermittelt und durch vorausschauendes Absenken der Kühlmitteltemperatur im Kühlkreislauf (3) und damit der Temperatur der Elektromobilitätskomponente (1) so in das System eingespeist werden, dass die durch die Elektromobilitätskomponente (1) zur Verfügung gestellte Antriebsleistung optimiert wird und die Elektromobilitätskomponente (1) im Durchlaufen und nach dem Durchlaufen der Fahrstrecke eine zulässige Grenztemperatur nicht überschreitet.

4. Verfahren nach Anspruch 3, **dadurch gekennzeichnet, dass** wenigstens die Temperatur des Energiespeichers und seine Wärmekapazität, die Temperatur des Elektromotors und seine Wärmekapazität, sowie die Temperatur des Kühlmittels im Kühlsystem und seine Wärmekapazität und das Wärmeabführvermögen des wenigstens einen Wärmetauschers (12) sowie dessen Umgebungstemperatur als Eingangsgrößen für das Modell dienen und dass mit Hilfe des Lastprofils durch die Prognoseeinheit (6) diejenige Komponente ermittelt wird, die aufgrund der zu erwartenden Wärmeeinkopplung ihre Grenztemperatur erreicht und dass die Temperatur im Kühlsystem mittels des wenigstens einen Wärmetauschers (12) vorausschauend so weit abgesenkt wird, dass diese Grenztemperatur während und nach dem Durchlaufen der Fahrstrecke durch diese Komponente nicht erreicht wird.

5. Verfahren nach Anspruch 3, **dadurch gekennzeichnet, dass** der Energiespeicher im Generatorbetrieb aufgeladen wird und dass auch in dieser Betriebsart mit Hilfe des Lastprofils die Komponente ermittelt wird, die aufgrund der zu erwartenden Wärmeeinkopplung ihre Grenztemperatur erreicht und dass die Temperatur im Kühlsystem mittels des wenigstens einen Wärmetauschers (12) vorausschauend so weit abgesenkt wird, dass diese Grenztemperatur während und nach Durchlaufen der Fahrstrecke durch diese Komponente nicht erreicht wird.

6. Verfahren nach einem der vorhergehenden Ansprüche, **dadurch gekennzeichnet, dass** die Temperaturniveaus der Kühlkreisläufe, der aus wenigstens zwei Teilkomponenten bestehenden Elektromobilitätskomponente, unterschiedlich sein können und dass eine Absenkung des Temperaturniveaus mittels des jeweils zugeordneten wenigstens einen Wärmetauschers für jeden der Teilkreisläufe gesondert erfolgt.

7. Verfahren nach einem der vorhergehenden Ansprüche, **dadurch gekennzeichnet, dass** das Absenken der Kühlmitteltemperatur vorausschauend in wenigstens einer Betriebsphase mit prognostizierter geringer thermischer Beanspruchung des wenigstens einen Kühlmittelkreislauf erfolgt, derart dass die Absenkung der Kühlmitteltemperatur zeitlich vor der darauf folgenden Phase erhöhter thermischer Beanspruchung des wenigstens einen Kühlmittelkreislauf liegt.

8. Verfahren nach einem der vorhergehenden Ansprüche, **dadurch gekennzeichnet, dass** die Prognoseeinheit (6) in fortlaufender Folge aus jeweils einem voreinstellbaren Bereich der zukünftigen Fahrstrecke das Geländeprofil ermittelt und daraus ein Lastprofil erstellt, das sodann zur Ermittlung der zukünftigen Kühlbedarfe des jeweiligen Bereichs der zukünftigen Fahrstrecke herangezogen wird.

9. Verfahren nach einem der vorhergehenden Ansprüche, **dadurch gekennzeichnet, dass** die Steuer- und Regeleinheit (2), wenigstens für zwei aufeinanderfolgende zukünftige Fahrstrecken die Spitzenbelastungen des Kühlkreislaufs (3) ermittelt und dass die Steuer- und Regeleinheit (2) dann, wenn am Anfang einer nachfolgenden zukünftigen Fahrstrecke Spitzenbelastungen des Kühlkreislaufs (3) auftreten, während des Durchfahrens der vorausgehenden Fahrstrecke zusätzlicher Kühlleistung in das System eingespeist.

10. Verfahren nach einem der vorhergehenden Ansprüche, **dadurch gekennzeichnet, dass** während des Durchlaufens der Fahrstrecke für die Temperatur wenigstens einer Teilkomponente der Elektromobilitätskomponente (1), sowie die Kühlmitteltemperatur des wenigstens einen Kühlmittelkreislaufes (3) ein modellbasierter Sollwert und ein messtechnisch erfasster Istwert ermittelt werden und in einem Istwert-Sollwertvergleich ein Korrekturfaktor für die Temperaturabsenkung des wenigstens einen Kühlkreislaufs ermittelt wird.

11. Anordnung zur Durchführung des Verfahrens nach einem der vorhergehenden Ansprüche 1 bis 10, wobei in der Steuer- und Regeleinheit (2) wenigstens
- eine Ist-Zustand-Erfassungseinheit (4) vorgesehen ist, die unter Zuhilfenahme von Messwerten zyklisch einen Wert ermittelt, der die zum Erfassungszeitpunkt aktuelle Kühlleistung des Systems aus Kühlkreislauf (3) und Elektromobilitätskomponente (1) beschreibt,
- eine Navigationseinheit (5) vorgesehen ist, die ein Geländeprofil und weitere die benötigte Antriebsleistung der Elektromobilitätskomponente (1) beeinflussende Daten für eine zukünftige Fahrstrecke enthält,
- eine Prognoseeinheit (6) vorgesehen ist, die aus dem Geländeprofil und den weiteren die benötigte Antriebsleistung beeinflussenden Daten ein Lastprofil einer zukünftigen Fahrstrecke erzeugt, und aus diesem, ausgehend von dem durch die Ist-Zustand-Erfassungseinheit (5) ermittelten Ausgangswert als Startkühlleistung, ein Prognose-Kühlprofil der zukünftigen Fahrstrecke in einem Simulationslauf ermittelt,
- eine Auswerteeinheit (7) vorgesehen ist, die aus dem ermittelten Prognose-Kühlprofil und einer in der Steuer- und Regeleinheit (2) wertmäßig verankerten maximalen Kühlleistung, zusätzliche Kühlbedarfe ermittelt,
- eine Ansteuereinheit (8) für die Kühlleistung erhöhende Mittel vorgesehen ist, die die zusätzlichen Kühlbedarfe in das System aus Kühlkreislauf (3) und Elektromobilitätskomponente (1) vor dem Zeitraum einspeist, in dem die zusätzlichen Kühlbedarfe benötigt werden,
wobei die Elektromobilitätskomponente (1) wenigstens einen Energiespeicher und wenigstens einen Elektromotor aufweist, die über jeweils wenigstens einen eigenen Kühlkreislauf (3) mit wenigstens einem Wärmetauscher (12) verfügen,
wobei die Elektromobilitätskomponente (1) Teil eines Hybridantriebes bestehend aus der Elektromobilitätskomponente (1) und einem Verbrennungsmotor ist, und wobei der jeweils wenigstens eine Wärmetauscher (12) im Kühlkreislauf (3) der Elektromobilitätskomponente (1) wärmetechnisch mit dem Kühlkreislauf des Verbrennungsmotors gekoppelt ist, wobei das Absenken der Kühlmitteltemperatur im Kühlkreislauf (3) der Elektromobilitätskomponente (1) vorausschauend in wenigstens einer Betriebsphase mit geringer thermischer Beanspruchung des wenigstens einen Kühlkreislauf des Verbrennungsmotors erfolgt, derart dass die Absenkung der Kühlmitteltemperatur zeitlich vor der darauf folgenden Phase erhöhter thermischer Beanspruchung des wenigstens einen Kühlmittelkreislauf der Elektromobilitätskomponente (1) liegt, wobei Betriebsphasen mit geringer thermischer Beanspruchung des wenigstens einen Kühlkreislauf des Verbrennungsmotors aus der zukünftigen Fahrstrecke ermittelt werden,
wobei sowohl hinsichtlich des Geländeprofils als auch hinsichtlich der weiteren den Kühlbedarf beim Durchfahren der zukünftigen Strecke beeinflussenden Parametern eine Aufteilung in Kategorien erfolgt, wobei diese Kategorien als diskrete Werte der Prognoseeinheit (6) der Steuer- und Regeleinheit (2) zur Verfügung gestellt werden, um daraus ausgehend von einem durch die Ist-Zustand-Erfassungseinheit (4) ermittelten Ausgangswert als Startkühlleistung das Prognose-Kühlprofil zu erstellen, und
wobei eine Leistungsmodulationseinrichtung vorgesehen ist, wobei diese in Fällen in denen aufgrund der zukünftigen Fahrstrecke die Grenztemperatur zumindest einer Teilkomponente auch nach Absenken der Temperatur im Kühlsystem überschritten würde, die Leistung der Elektromobilitätkomponente (1) so weit reduziert, dass diese Grenztemperatur nach Absenken der Temperatur im Kühlsystem nicht erreicht wird, und
wobei eine Signalvorrichtung vorgesehen ist, die dem Fahrzeugführer zumindest die Phasen der Spitzenbelastungen des Kühlkreislaufs signalisiert, und wobei die Signalisierung zeitlich vor dem Eintreten der Spitzenbelastung erfolgt.

12. Fahrzeug insbesondere Nutzfahrzeug mit einer mittels Kühlkreislauf gekühlten Elektromobilitätskomponente, **dadurch gekennzeichnet, dass** das Fahrzeug insbesondere Nutzfahrzeug eine Anordnung gemäß Anspruch 11 aufweist.

## Claims

1. Method for optimizing the motor availability of an electromobility component (1) cooled by way of a cooling circuit,
wherein the electromobility component (1) has at least one energy storage unit and at least one electric motor that each have at least one dedicated cooling circuit (3) having at least one heat exchanger (12),
wherein the electromobility component (1) feeds in drive power in a vehicle, wherein a control and regulation unit (2) ascertains peak loads of the cooling circuit (3) from a future route, and wherein additional cooling power is predictively fed into the system in a manner dependent on the route, temporally before these peak loads of the cooling circuit (3), by way of the at least one heat exchanger (12) provided in the cooling circuit (3) such that the drive power made available by the electromobility component (1) is optimized and the drive power and/or the availability of the drive power is thus increased, and the electromobility component (1), while taking and after taking the route, does not exceed a permitted limit temperature, and this limit temperature is not reached while and after taking the route, even in recovery mode,
and wherein the electromobility component (1) is part of a hybrid drive consisting of the electromobility component (1) and a combustion engine, and
wherein the respective at least one heat exchanger (12) in the cooling circuit (3) of the electromobility component (1) is thermally coupled to the cooling circuit of the combustion engine, wherein the coolant temperature is predictively lowered in the cooling circuit (3) of the electromobility component (1) in at least one operating phase with low thermal loading of the at least one cooling circuit of the combustion engine such that the lowering of the coolant temperature is temporally before the subsequent phase of increased thermal loading of the at least one cooling circuit (3) of the electromobility component (1), wherein operating phases with low thermal loading of the at least one cooling circuit of the combustion engine are ascertained from the future route,
wherein a division into categories takes place both in terms of the terrain profile and in terms of the further parameters influencing the cooling requirement while taking the future route, wherein these categories are made available to a prediction unit (6) of the control and regulation unit (2) in the form of discrete values in order to create therefrom the predicted cooling profile proceeding from a starting value, ascertained by an actual state detection unit (4), as starting cooling power, and
wherein provision is made for a power modulation apparatus, wherein this reduces the power of the electromobility component (1), in cases in which the limit temperature of at least one subcomponent would be exceeded even after lowering the temperature in the cooling system owing to the future route, to the extent that this limit temperature is not reached after lowering the temperature in the cooling system, and
wherein provision is made for a signal device that signals at least the phases of peak loading of the cooling circuit to the vehicle driver, and that the signalling takes place temporally before the occurrence of the peak loading.

2. Method according to Claim 1, **characterized in that** the control and regulation unit (2) detects the cooling capability of the system consisting of electromobility component (1) and cooling circuit (3) and links it to a cooling profile ascertained from a load profile of a future route so as to ascertain peak loads of the cooling circuit in which the limit temperature of the electromobility component (1) would be exceeded, and that additional cooling power is fed predictively into the system, temporally before these peak loads of the cooling circuit (3), by way of at least one heat exchanger (12) provided in the cooling circuit (3) such that the drive power made available by the electromobility component (1) is optimized and the electromobility component (1) does not exceed a permitted limit temperature while taking and after taking the route.

3. Method according to Claim 2, **characterized in that** provision is made, in the control and regulation unit (2), for a model thermally representing the system consisting of electromobility component (1) and cooling circuit (3) and that represents the cooling capability of the system, wherein this model is served by at least the most important variables influencing the cooling capability of the system as input variables and wherein the model is assigned to the prediction unit (6), which ascertains future cooling requirements on the basis of at least one load profile for the electromobility component (1) as ascertained from a terrain profile of a future route, and wherein future additional cooling requirements are ascertained from model data and prediction data and fed into the system by predictively lowering the coolant temperature in the cooling circuit (3) and thus the temperature of the electromobility component (1) such that the drive power made available by the electromobility component (1) is optimized and the electromobility component (1) does not exceed a permitted limit temperature while taking and after taking the route.

4. Method according to Claim 3, **characterized in that** at least the temperature of the energy storage unit and its thermal capacity, the temperature of the electric motor and its thermal capacity, and the temperature of the coolant in the cooling system and its thermal capacity and the heat dissipation capability of the at least one heat exchanger (12) and its ambient temperature serve as input variables for the model, and that the prediction unit (6) uses the load profile to ascertain that component that reaches its limit temperature due to the expected coupling-in of heat, and that the temperature in the cooling system is predictively lowered by way of the at least one heat exchanger (12) to the extent that this limit temperature is not reached by this component while and after taking the route.

5. Method according to Claim 3, **characterized in that** the energy storage unit is charged in generator mode and that the load profile is used, in this operating mode as well, to ascertain the component that reaches its limit temperature due to the expected coupling-in of heat, and that the temperature in the cooling system is predictively lowered by way of the at least one heat exchanger (12) to the extent that this limit temperature is not reached by this component while and after taking the route.

6. Method according to one of the preceding claims, **characterized in that** the temperature levels of the cooling circuits, of the electromobility component consisting of at least two subcomponents, may be different, and that the temperature level is lowered separately for each of the partial circuits by way of the respectively assigned at least one heat exchanger.

7. Method according to one of the preceding claims, **characterized in that** the coolant temperature is lowered predictively in at least one operating phase with predicted low thermal loading of the at least one coolant circuit such that the lowering of the coolant temperature is temporally before the subsequent phase of increased thermal loading of the at least one coolant circuit.

8. Method according to one of the preceding claims, **characterized in that** the prediction unit (6) continuously ascertains the terrain profile from a respective presettable section of the future route and creates therefrom a load profile that is then used to ascertain the future cooling requirements of the respective section of the future route.

9. Method according to one of the preceding claims, **characterized in that** the control and regulation unit (2) ascertains the peak loads of the cooling circuit (3) at least for two successive future routes and that the control and regulation unit (2), when peak loads of the cooling circuit (3) occur at the start of a following future route, feeds additional cooling power into the system while taking the preceding route.

10. Method according to one of the preceding claims, **characterized in that,** while taking the route, a model-based target value and an actual value detected through measurement are ascertained for the temperature of at least one subcomponent of the electromobility component (1), and the coolant temperature of the at least one coolant circuit (3), and a correction factor for lowering the temperature of the at least one cooling circuit is ascertained in an actual value/target value comparison.

11. Arrangement for performing the method according to one of preceding Claims 1 to 10, wherein provision is made in the control and regulation unit (2) for at least
- an actual state detection unit (4) that uses measured values to cyclically ascertain a value that describes the current cooling power of the system consisting of cooling circuit (3) and electromobility component (1) at the detection time,
- a navigation unit (5) that contains a terrain profile and further data influencing the required drive power of the electromobility component (1) for a future route,
- a prediction unit (6) that generates a load profile of a future route from the terrain profile and the further data influencing the required drive power, and ascertains therefrom a predicted cooling profile of the future route in a simulation run, proceeding from the starting value, ascertained by the actual state detection unit (5), as starting cooling power,
- an evaluation unit (7) that ascertains additional cooling requirements from the ascertained predicted cooling profile and a maximum cooling power enshrined in terms of value in the control and regulation unit (2),
- an actuation unit (8) for means that increase the cooling power, which means feed the additional cooling requirements into the system consisting of cooling circuit (3) and electromobility component (1) before the interval in which the additional cooling requirements are needed,
wherein the electromobility component (1) has at least one energy storage unit and at least one electric motor that each have at least one dedicated cooling circuit (3) having at least one heat exchanger (12),
wherein the electromobility component (1) is part of a hybrid drive consisting of the electromobility component (1) and a combustion engine, and wherein the respective at least one heat exchanger (12) in the cooling circuit (3) of the electromobility component (1) is thermally coupled to the cooling circuit of the combustion engine, wherein the coolant temperature is predictively lowered in the cooling circuit (3) of the electromobility component (1) in at least one operating phase with low thermal loading of the at least one cooling circuit of the combustion engine such that the lowering of the coolant temperature is temporally before the subsequent phase of increased thermal loading of the at least one coolant circuit of the electromobility component (1), wherein operating phases with low thermal loading of the at least one cooling circuit of the combustion engine are ascertained from the future route,
wherein a division into categories takes place both in terms of the terrain profile and in terms of the further parameters influencing the cooling requirement while taking the future route, wherein these categories are made available to the prediction unit (6) of the control and regulation unit (2) in the form of discrete values in order to create therefrom the predicted cooling profile proceeding from a starting value, ascertained by the actual state detection unit (4), as starting cooling power, and
wherein provision is made for a power modulation apparatus, wherein this reduces the power of the electromobility component (1), in cases in which the limit temperature of at least one subcomponent would be exceeded even after lowering the temperature in the cooling system owing to the future route, to the extent that this limit temperature is not reached after lowering the temperature in the cooling system, and
wherein provision is made for a signal device that signals at least the phases of peak loading of the cooling circuit to the vehicle driver, and wherein the signalling takes place temporally before the occurrence of the peak loading.

12. Vehicle, in particular utility vehicle, having an electromobility component cooled by way of a cooling circuit, **characterized in that** the vehicle, in particular utility vehicle, has an arrangement according to Claim 11.

## Revendications

1. Procédé d'optimisation de la disponibilité motrice d'un composant d'électromobilité (1) refroidi au moyen d'un circuit de refroidissement,
le composant d'électromobilité (1) présentant au moins un accumulateur d'énergie et au moins un moteur électrique qui disposent respectivement d'au moins un circuit de refroidissement (3) propre doté d'au moins un échangeur thermique (12),
le composant d'électromobilité (1) alimentant de la puissance d'entraînement dans un véhicule, une unité de commande et de régulation (2) déterminant à partir d'un trajet futur des charges de pointe du circuit de refroidissement (3), et dans lequel, par rapport au trajet, avant ces charges de pointe du circuit de refroidissement (3), au moyen de l'au moins un échangeur thermique (12) prévu dans le circuit de refroidissement (3), une puissance de refroidissement supplémentaire est alimentée dans le système de manière par anticipation de telle sorte que la puissance d'entraînement fournie par le composant d'électromobilité (1) soit optimisée et donc la puissance d'entraînement et/ou la disponibilité de la puissance d'entraînement soient augmentées, et que le composant d'électromobilité (1) ne dépasse pas une température limite admissible lors du passage ou après le passage par le trajet, et que cette température limite ne soit pas atteinte pendant ou après le passage par le trajet même en mode récupération, et
dans lequel le composant d'électromobilité (1) fait partie d'un entraînement hybride composé du composant d'électromobilité (1) et d'un moteur à combustion interne, et
dans lequel respectivement ledit au moins un échangeur thermique (12) dans le circuit de refroidissement (3) du composant d'électromobilité (1) est couplé thermiquement au circuit de refroidissement du moteur à combustion interne, l'abaissement de la température de fluide de refroidissement dans le circuit de refroidissement (3) du composant d'électromobilité (1) étant effectué par anticipation dans au moins une phase de fonctionnement avec une faible contrainte thermique de l'au moins un circuit de refroidissement du moteur à combustion interne, de telle sorte que l'abaissement de la température de fluide de refroidissement se situe avant la phase consécutive à contrainte thermique accrue de l'au moins un circuit de fluide de refroidissement (3) du composant d'électromobilité (1), des phases de fonctionnement à faible contrainte thermique de l'au moins un circuit de refroidissement du moteur à combustion interne étant déterminées à partir du trajet futur,
dans lequel à la fois concernant le profil de terrain et concernant les autres paramètres influençant le besoin en refroidissement lors du passage par le trajet futur, une répartition en catégories est effectuée, ces catégories sous forme de valeurs discrètes étant mises à disposition d'une unité de pronostic (6) de l'unité de commande et de régulation (2) afin de créer à partir de celles-ci, en partant d'une valeur initiale déterminée par une unité de détection d'état réel (4) comme puissance de refroidissement de départ, le profil de refroidissement de pronostic, et
dans lequel un dispositif de modulation de puissance est prévu, dans lequel, dans les cas où la température limite d'au moins un composant partiel serait dépassée en raison du trajet futur même après l'abaissement de la température dans le système de refroidissement, celui-ci réduit la puissance du composant d'électromobilité (1) à tel point que cette température limite ne soit pas atteinte après l'abaissement de la température dans le système de refroidissement, et
dans lequel un dispositif de signalisation est prévu qui signale au conducteur de véhicule au moins les phases des charges de pointe du circuit de refroidissement, et en ce que la signalisation est effectuée avant l'occurrence de la charge de pointe.

2. Procédé selon la revendication 1, **caractérisé en ce que** l'unité de commande et de régulation (2) détecte la capacité de refroidissement du système composé du composant d'électromobilité (1) et du circuit de refroidissement (3) et la met en corrélation avec un profil de refroidissement déterminé à partir d'un profil de charge d'un trajet futur de telle sorte que des charges de pointe du circuit de refroidissement sont déterminées pour lesquelles la température limite du composant d'électromobilité (1) serait dépassée, et qu'avant ces charges de pointe du circuit de refroidissement (3), au moyen d'au moins un échangeur thermique (12) prévu dans le circuit de refroidissement (3), une puissance de refroidissement supplémentaire soit alimentée par anticipation dans le système de telle sorte que la puissance d'entraînement fournie par le composant d'électromobilité (1) soit optimisée et le composant d'électromobilité (1) ne dépasse pas une température limite admissible lors du passage ou après le passage par le trajet.

3. Procédé selon la revendication 2, **caractérisé en ce que** dans l'unité de commande et de régulation (2), un modèle représentant thermiquement le système composé du composant d'électromobilité (1) et du circuit de refroidissement (3) est prévu qui reproduit la capacité de refroidissement, au moins les grandeurs les plus importantes influençant la capacité de refroidissement du système servant de grandeurs d'entrée à ce modèle, et le modèle étant associé à l'unité de pronostic (6) qui détermine en fonction d'au moins un profil de charge déterminé à partir d'un profil de terrain d'un trajet futur des besoins en refroidissement futurs pour le composant d'électromobilité (1), et dans lequel, à partir de données de modèle et de données de pronostic, des besoins en refroidissement supplémentaires futurs sont déterminés et sont alimentés dans le système par un abaissement par anticipation de la température de fluide de refroidissement dans le circuit de refroidissement (3) et donc de la température du composant d'électromobilité (1) de telle sorte que la puissance d'entraînement fournie par le composant d'électromobilité (1) soit optimisée et le composant d'électromobilité (1) ne dépasse pas une température limite admissible lors du passage et après le passage par le trajet.

4. Procédé selon la revendication 3, **caractérisé en ce qu'**au moins la température de l'accumulateur d'énergie et sa capacité thermique, la température du moteur électrique et sa capacité thermique, ainsi que la température du fluide de refroidissement dans le système de refroidissement et sa capacité thermique et la capacité de dissipation thermique de l'au moins un échangeur thermique (12) ainsi que sa température ambiante servent de grandeurs d'entrée pour le modèle, et **en ce que** l'unité de pronostic (6) détermine à l'aide du profil de charge le composant qui atteint sa température limite en raison de l'injection de chaleur prévue, et **en ce que** la température dans le système de refroidissement est abaissée par anticipation au moyen de l'au moins un échangeur thermique (12) à tel point que cette température limite ne soit pas atteinte par ce composant pendant ou après le passage par le trajet.

5. Procédé selon la revendication 3, **caractérisé en ce que** l'accumulateur d'énergie est rechargé en mode générateur, et **en ce que** même dans ce mode de fonctionnement, à l'aide du profil de charge, le composant est déterminé qui atteint sa température limite en raison de l'injection de chaleur prévue, et **en ce que** la température dans le système de refroidissement est abaissée par anticipation au moyen de l'au moins un échangeur de chaleur (12) à tel point que cette température limite ne soit pas atteinte par ce composant pendant ou après le passage par le trajet.

6. Procédé selon l'une quelconque des revendications précédentes, **caractérisé en ce que** les niveaux de température des circuits de refroidissement du composant d'électromobilité composé d'au moins deux composants partiels peuvent être différents, et **en ce qu'**un abaissement du niveau de température est effectué séparément pour chacun des circuits partiels au moyen de l'au moins un échangeur thermique respectivement associé.

7. Procédé selon l'une quelconque des revendications précédentes, **caractérisé en ce que** l'abaissement de la température de fluide de refroidissement est effectué par anticipation dans au moins une phase de fonctionnement à faible contrainte thermique pronostiquée de l'au moins un circuit de fluide de refroidissement de telle sorte que l'abaissement de la température de fluide de refroidissement se situe avant la phase consécutive à contrainte thermique accrue de l'au moins un circuit de fluide de refroidissement.

8. Procédé selon l'une quelconque des revendications précédentes, **caractérisé en ce que** l'unité de pronostic (6) détermine consécutivement le profil de terrain à partir respectivement d'une zone prédéfinissable du trajet futur et crée un profil de charge à partir de celui-ci qui est ensuite utilisé pour déterminer les besoins en refroidissement futurs de la zone respective du trajet futur.

9. Procédé selon l'une quelconque des revendications précédentes, **caractérisé en ce que** l'unité de commande et de régulation (2) détermine, au moins pour deux trajets futurs successifs, les charges de pointe du circuit de refroidissement (3), et **en ce que**, si des charges de pointe du circuit de refroidissement (3) surviennent au début d'un trajet futur suivant, l'unité de commande et de régulation (2) alimente une puissance de refroidissement supplémentaire dans le système pendant le passage par le trajet précédent.

10. Procédé selon l'une quelconque des revendications précédentes, **caractérisé en ce que** pendant le passage par le trajet, pour la température d'au moins un composant partiel du composant d'électromobilité (1), ainsi que pour la température de fluide de refroidissement de l'au moins un circuit de fluide de refroidissement (3), une valeur de consigne basée sur un modèle et une valeur réelle détectée par une technique de mesure sont déterminées, et dans une comparaison de la valeur réelle avec la valeur de consigne, un facteur de correction pour l'abaissement de température de l'au moins un circuit de refroidissement est déterminé.

11. Agencement pour effectuer le procédé selon l'une quelconque des revendications précédentes 1 à 10, dans lequel, dans l'unité de commande et de régulation (2) au moins
- une unité de détection d'état réel (4) est prévue qui détermine de manière cyclique à l'aide de valeurs de mesure une valeur qui décrit la puissance de refroidissement actuelle du système composé du circuit de refroidissement (3) et du composant d'électromobilité (1) au moment de la détection,
- une unité de navigation (5) est prévue qui comprend un profil de terrain et d'autres données influençant la puissance d'entraînement nécessaire du composant d'électromobilité (1) pour un trajet futur,
- une unité de pronostic (6) est prévue qui génère à partir du profil de terrain et des autres données influençant la puissance d'entraînement nécessaire un profil de charge d'un trajet futur, et détermine à partir de celui-ci, en partant de la valeur initiale déterminée par l'unité de détection d'état réel (5) comme puissance de refroidissement de départ un profil de refroidissement de pronostic du trajet futur dans un cycle de simulation,
- une unité d'évaluation (7) est prévue qui détermine des besoins en refroidissement supplémentaires à partir du profil de refroidissement de pronostic déterminé et d'une puissance de refroidissement maximale ancrée en valeur dans l'unité de commande et de régulation (2),
- une unité de pilotage (8) pour des moyens augmentant la puissance de refroidissement est prévue qui alimente les besoins en refroidissement supplémentaires dans le système composé du circuit de refroidissement (3) et du composant d'électromobilité (1) avant la période dans laquelle les besoins en refroidissement supplémentaires sont nécessaires,
le composant d'électromobilité (1) présentant au moins un accumulateur d'énergie et au moins un moteur électrique qui disposent respectivement d'au moins un circuit de refroidissement (3) propre doté d'au moins un échangeur thermique (12),
le composant d'électromobilité (1) faisant partie d'un entraînement hybride composé du composant d'électromobilité (1) et d'un moteur à combustion interne, et ledit respectivement au moins un échangeur thermique (12) étant couplé dans le circuit de refroidissement (3) du composant d'électromobilité (1) thermiquement au circuit de refroidissement du moteur à combustion interne, l'abaissement de la température de fluide de refroidissement dans le circuit de refroidissement (3) du composant d'électromobilité (1) étant effectué par anticipation dans au moins une phase de fonctionnement à faible contrainte thermique de l'au moins un circuit de refroidissement du moteur à combustion interne de telle sorte que l'abaissement de la température de fluide de refroidissement se situe avant la phase suivante à contrainte thermique accrue de l'au moins un circuit de fluide de refroidissement du composant d'électromobilité (1), des phases de fonctionnement à faible contrainte thermique de l'au moins un circuit de refroidissement du moteur à combustion interne étant déterminées à partir du trajet futur,
une répartition en catégories étant effectuée à la fois concernant le profil de terrain et concernant les autres paramètres influençant le besoin en refroidissement lors du passage par le trajet futur, ces catégories étant mises à disposition de l'unité de pronostic (6) de l'unité de commande et de régulation (2) sous forme de valeurs discrètes afin de créer à partir de celles-ci, en partant d'une valeur initiale déterminée par l'unité de détection d'état réel (4) comme puissance de refroidissement de départ, le profil de refroidissement de pronostic, et
un dispositif de modulation de puissance étant prévu, dans lequel, dans les cas où la température limite d'au moins un composant partiel serait dépassée en raison du trajet futur même après l'abaissement de la température dans le système de refroidissement, celui-ci réduit la puissance du composant d'électromobilité (1) à tel point que cette température limite ne soit pas atteinte après l'abaissement de la température dans le système de refroidissement, et
un dispositif de signalisation étant prévu qui signale au conducteur de véhicule au moins les phases des charges de pointe du circuit de refroidissement, et la signalisation ayant lieu avant l'occurrence de la charge de pointe.

12. Véhicule, en particulier véhicule utilitaire, comprenant un composant d'électromobilité refroidi au moyen d'un circuit de refroidissement, **caractérisé en ce que** le véhicule, en particulier le véhicule utilitaire, présente un agencement selon la revendication 11.
